# EUROPEAN PATENT APPLICATION

(11) **EP 4 455 228 A1**
(43) Date of publication of application: **30.10.2024**
(21) Application number: 24172158.8
(22) Date of filing: 24.04.2024
(51) Int. Cl.: C09D 5/00

(54) **SEEDBEDS**

(30) Priority: 26.04.2023 KR 20230054489
(71) Applicant: Ace Mulch Co., Ltd, Okcheon-gun, Chungcheongbuk-do (KR)
(72) Inventor: CHOI, Hyun Hwang, Okcheon-gun, Chungcheongbuk-do (KR)
(74) Representative: Isarpatent

(57) **Abstract**

The disclosure relates to naturally biodegradable functional seedling paper pot and seedbed including a paper member with an open top, a side portion and a bottom portion, a first coating layer coated with an acrylic emulsion resin on inner and outer surfaces of the paper member, a second coating layer coated with a biodegradable coating composition on the first coating layer of the inner surface of the paper member, and a plurality of holes H formed in the bottom portion of the paper member, in which the biodegradable coating composition of the second coating layer includes water, black mica, activated carbon, detoxified sulfur, minerals, liquid microorganisms, and starch.

According to the examples of the present disclosure, it is possible to supply nutrients necessary for the growth of crops by the biodegradation process of compositions that biodegrade completely after 3 to 4 months, help with the crop growth and prevent malnutrition in soil without separate fertilization works, eliminate the risk of damaging the seedling roots because there is no need for any separating work after seedling, reduce labor, and solve the soil pollution problems.

## Description

### Technical Field

The disclosure relates to a naturally biodegradable functional seedling paper pot and seedbed, and more specifically, to a naturally biodegradable functional seedling paper pot and seedbed, which is capable of supplying nutrients necessary for the growth of crops by the biodegradation process of compositions that biodegrade completely after 3 to 4 months, helping with the crop growth and preventing malnutrition in soil without separate fertilization works, eliminating the risk of damaging the seedling roots because there is no need for any separating work after seedling, reducing labor, and solving soil pollution problems.

### Technical Background of Invention

In general, a seedling pot contains the soil member for growth and provides a growth environment in which the plant seeds or seedlings can be planted and grow into seedlings or complete growth. In particular, the pot is made of plastic, formed in a pot shape, and has a drain hole formed for drainage on a bottom surface.

By the nature of plastic, this pot is recyclable, but since it takes a considerable period of time for the plant to grow completely, if left without proper maintenance, the pot may act as a major cause of soil pollution and environmental pollution, which poses a significant problem.

In order to solve the problem described above, the seedling pot can be made of eco-friendly paper that is biodegradable, but there is a problem in that it is difficult to maintain the shape of the pot and that the function of the pot is lost due to repeated moisture supply.

In addition, the seedling pot made of paper is quickly disintegrated into fiber by sufficient moisture and decomposed very rapidly by microorganisms, so there is a problem that it cannot maintain the growing soil contained therein for more than a certain period of time.

Therefore, there is a need for a seedling pot that can provide sufficiently satisfying functions as those of the plastic seedling pot, such as maintaining shapes and providing a growth environment during the breeding period, and that biodegrades naturally after the end of incubation, thus supplying nutrients necessary for the growth of crops as the biodegradation continues, helping crops grow without separate fertilization work, and preventing malnutrition in the soil.

### Prior Art Literature

### Patent Literature

(PTL 01) KR10-0818405 B1 (2008.03.25.)
(PTL 02) KR 10-0813403 B1(2008. 03. 06.)

### SUMMARY

### Problems To Be Solved

In order to solve one or more problems (e.g., the problems described above and/or other problems not explicitly described herein), an object of the present disclosure is to provide a naturally biodegradable functional seedling paper pot and seedbed, which is capable of supplying nutrients necessary for the growth of crops by the biodegradation process of compositions that biodegrade completely after 3 to 4 months, and helping with the crop growth and preventing malnutrition in soil without separate fertilization works.

Another object of the present disclosure is to provide a naturally biodegradable functional seedling paper pot and seedbed, which is capable of eliminating the risk of damaging seedling roots because there is no need for any separating work after planting, reducing labor, and solving the problem of soil contamination.

### Means to Solve The Problems

In order to achieve the objects described above, the naturally biodegradable functional seedling paper pot and seedbed according to the present disclosure may include a paper member with an open top, a side portion, and a bottom portion, a first coating layer coated with an acrylic emulsion resin on inner and outer surfaces of the paper member, a second coating layer coated with a biodegradable coating composition on the first coating layer of the inner surface of the paper member, and a plurality of holes H formed in the bottom portion of the paper member, in which the biodegradable coating composition of the second coating layer may include water, black mica, activated carbon, detoxified sulfur, minerals, liquid microorganisms, and starch.

The paper member may be in a cup shape with the open top, the side portion, and the bottom portion.

In addition, the paper member may include a plurality of paper members in a cup shape with the open top, the side potion, and the bottom potion, and which may be arranged vertically and horizontally at a certain distance in a checkerboard pattern to receive seedlings therein.

In addition, the acrylic emulsion resin of the first coating layer may include an acrylic monomer, a room-temperature self-crosslinking monomer, a reactive emulsifier, and water.

In addition, the biodegradable coating composition of the second coating layer may include 2 to 10 parts by weight of black mica, 1 to 3 parts by weight of activated carbon, 0.5 to 2 parts by weight of detoxified sulfur, 1 to 3 parts by weight of minerals, 1 to 3 parts by weight of liquid microorganisms, and 5 to 10 parts by weight of starch, based on 100 parts by weight of water.

### Effects of The Invention

According to the examples of the present disclosure, it is possible to supply nutrients necessary for the growth of crops by the biodegradation process of compositions that biodegrade completely after 3 to 4 months, help with the crop growth and prevent malnutrition in soil without separate fertilization works, eliminate the risk of damaging the seedling roots because there is no need for any separating work after seedling, reduce labor, and solve the soil pollution problems.

### BRIEF DESCRIPTION OF THE DRAWINGS

The above and other objects, features and advantages of the present disclosure will become more apparent to those of ordinary skill in the art by describing in detail exemplary embodiments thereof with reference to the accompanying drawings, in which:
FIG. 1 is a perspective view of a naturally biodegradable functional seedling paper pot and seedbed according to an example of the present disclosure;
FIG. 2 is a cross-sectional view of a naturally biodegradable functional seedling paper pot and seedbed according to the example of the present disclosure;
FIG. 3 is a plan view of a naturally biodegradable functional seedling paper pot and seedbed according to the example of the present disclosure;
FIG. 4 is a perspective view of a naturally biodegradable functional seedling paper pot and seedbed according to another example of the present disclosure;
FIG. 5 is a cross-sectional view of a naturally biodegradable functional seedling paper pot and seedbed according to yet another example of the present disclosure; and
FIG. 6 is a plan view of a naturally biodegradable functional seedling paper pot and seedbed according to yet another example of the present disclosure.

### DETAILED DESCRIPTION OF EMBODIMENTS OF THE INVENTION

Hereinafter, certain embodiments of the present disclosure will be described in detail with reference to the accompanying drawings.

The disclosure relates to a naturally biodegradable functional seedling paper pot and seedbed, which is capable of supplying nutrients necessary for the growth of crops by the biodegradation process of compositions that biodegrade completely after 3 to 4 months, helping with the crop growth and preventing malnutrition in soil without separate fertilization works, eliminating the risk of damaging the seedling roots because there is no need for any separating work after seedling, reducing labor, and solving the soil pollution problems.

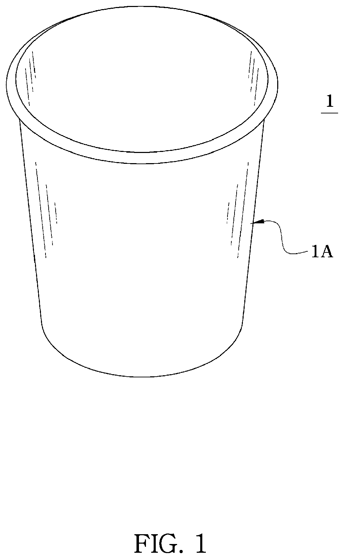

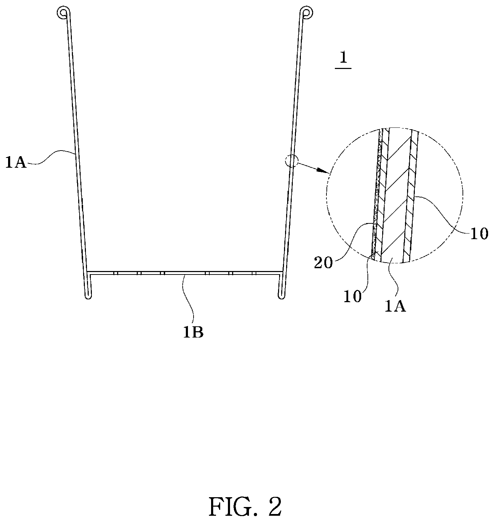

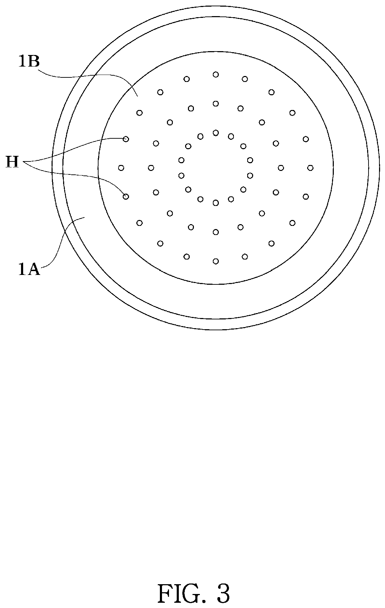

Referring to FIGS. 1 to 3, a naturally biodegradable functional seedling paper pot and seedbed 1 may include: a paper member in a cup shape with an open top, a side portion 1A, and a bottom portion 1B; a first coating layer 10 coated with an acrylic emulsion resin on inner and outer surfaces of the paper member; a second coating layer 20 coated with a biodegradable coating composition on the first coating layer 10 of the inner surface of the paper member; and a plurality of holes H formed in the bottom portion 1B of the paper member.

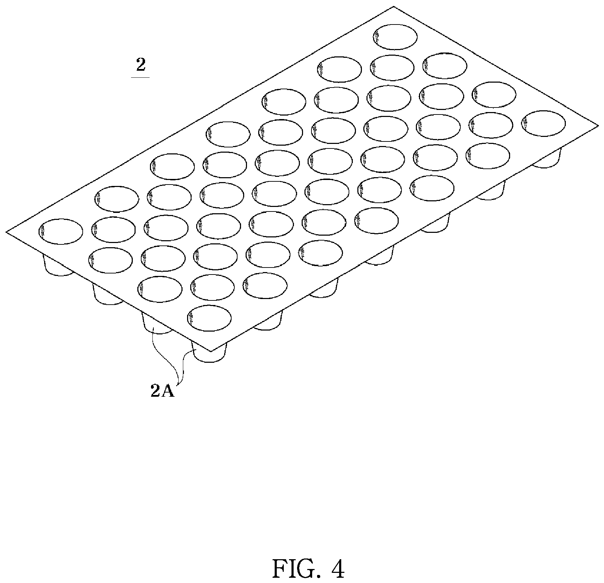

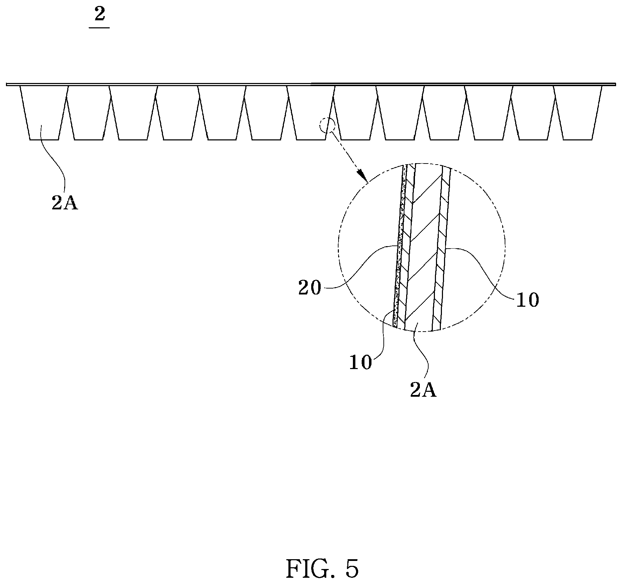

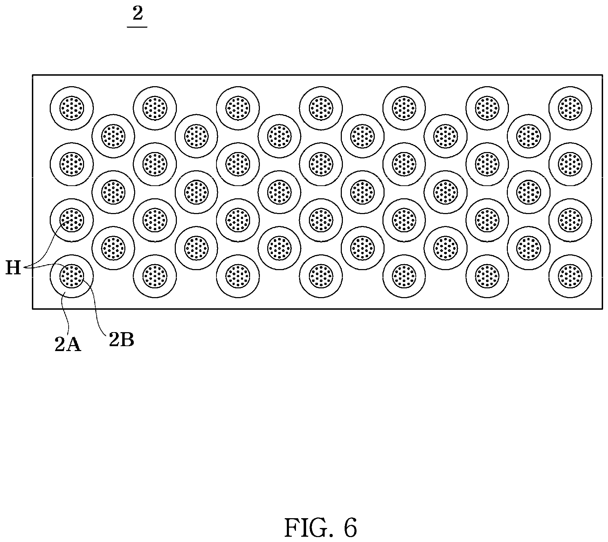

In addition, referring to the FIGS. 4 to 6, a naturally biodegradable functional seedling paper pot and seedbed 2 may include: a plurality of paper members in a cup shape with an open top, a side potion 2A, and a bottom potion 2B, which are arranged vertically and horizontally at a certain distance in a checkerboard pattern to receive seedlings therein; a first coating layer 10 coated with an acrylic emulsion resin on inner and outer surfaces of the paper member; a second coating layer 20 coated with a biodegradable coating composition on the first coating layer 10 of the inner surface of the paper member; and a plurality of holes H formed in the bottom portion 2B of the paper member.

The naturally biodegradable functional seedling paper pot and seedbed 1 and 2 according to an example of the disclosure is capable of providing sufficiently satisfying functions as those of the plastic seedling pot, such as maintaining shapes and providing a growth environment during the breeding period, and additionally, supplying nutrients necessary for the growth of crops by the biodegradation process of compositions that biodegrade completely after 3 to 4 months, helping with the crop growth and preventing malnutrition in soil without separate fertilization works, eliminating the risk of damaging the seedling roots because there is no need for any separating work after seedling, reducing labor, and solving the soil pollution problems.

In addition, the paper member of the naturally biodegradable functional seedling paper pot and seedbed 1 and 2 may include pulp components or plant fibers, enabling natural biodegradation after breeding.

More specifically, the paper member of the naturally biodegradable functional seedling paper pot and seedbed 1 and 2 may include any one or two or more of graft paper, filter paper, hanji or Korean paper, cardboard, vellum paper, mineral wood and cotton.

In an example, unbleached graft pulp may be used for the paper member.

This is because it maintains paper quality, and also reduces the weight of the paper and increases the tensile strength and tear strength to increase the wet strength.

In addition, it is preferable that the weight of the paper member used in an example of the present disclosure is in the range of 150 to 400 g/m².

If the weight of the paper member is less than 150 g/m², the strength of the base material is insufficient so that it is difficult to maintain the shape of the seeding pot and handle the same, and if the weight exceeds 400 g/m², the strength is too high, making it difficult to mold the pots and thus resulting in a problem of poor molding efficiency.

In this example, a plurality of holes H formed in the bottom potion 2B of the paper member facilitates water drainage and rooting of the planted crops.

In addition, the acrylic emulsion resin of the first coating layer 10 includes an acrylic monomer, a room-temperature self-crosslinking monomer, a reactive emulsifier, and water.

More specifically, with respect to 100 parts by weight of acrylic monomer, it contains 5 to 30 parts by weight of room-temperature self-crosslinking monomer, 1 to 10 parts by weight of reactive emulsifier, and 50 to 200 parts by weight of water.

By coating both the inner and outer surfaces of the paper member with the acrylic emulsion resin, the shape of the paper member can be maintained despite the supply of moisture for the seeds to properly take rooting and grow.

The acrylic emulsion resin may be an aqueous solution with a concentration of 30 to 50% by weight, and the acrylic emulsion resin with the above concentration is water-soluble, thus increasing degree of dissociation and minimizing contamination, adsorption, etc. during recycling, and exhibiting excellent adhesion, moldability, water resistance, oil resistance, and durability.

In addition, when landfilled in soil, there is an effect that not only does it naturally decompose and reduce bad odors, but it also minimizes the generation of harmful substances and environmental hormones that cause environmental pollution.

If the concentration of the acrylic resin is lower than 30% by weight, adhesion and water resistance may decrease, resulting in a decrease in moldability and durability, and if it exceeds 50% by weight, the adhesion is too strong, resulting in a problem of blocking phenomenon in which the resin is sticky.

In addition, because the time the acrylic emulsion resin of the first coating layer 10 maintains its shape is increased or decreased according to the number of coatings, amount of coatings, and so on, the number of coatings and the amount of coatings may easily be changed according to the crops to be planted.

The weight ratio of the paper member and the first coating layer 10 is preferably within the range of 1 : 0.05 to 0.3 in order to allow the entire natural biodegradation to occur after 3 to 4 months after the end of incubation based on the growth of general crops.

If the first coating layer 10 is formed at a ratio below the range mentioned above, it is not desirable because the first coating layer 10 is too thin to maintain its shape or increase adhesion, and if formed at a ratio above this range, the coating layer will be formed more than necessary, which is uneconomical.

The acrylic monomer is environmentally friendly and exhibits excellent viscosity, water resistance, and durability by using a monomer excluding environmental pollutants, and includes at least one selected from methyl methacrylate (MMA), butyl acrylate-butyl ester (BAM), 2-ethyl hexyl acrylate, 2-EHAM, 2-ethyl hexyl methacrylate, 2-hydroxyethyl methacrylate, styrene monomer (SM), ethyl acrylate monomer (EAM), acrylonitrile (AN), methyl acrylate (MA), methacrylamide (MAA), acryloyl chloride (AC), acrylamide, and itaconic acid.

The room-temperature self-crosslinking monomer has a self-crosslinking property at room temperature after water evaporation so that it is copolymerized by reacting with the acrylic monomer, and includes at least one selected from glycidyl methacrylate (GMA) and diacetone acrylamide (DAAM).

If the content of the room-temperature self-crosslinking monomer is below the range mentioned above, copolymerization with the acrylic monomer is not sufficiently accomplished, and it is difficult to obtain a resin having suitable properties such as viscosity, water resistance, durability, and so on, and if the content of the room-temperature self-crosslinking monomer is above this range, the resin has rigid property, making it difficult to control the viscosity, and as a result, the properties such as water resistance and durability also deteriorate.

The reactive emulsifier is essential for emulsion polymerization and stable dispersion of the monomers, and plays a role in improving initial particle generation, size control of the generated particles, stability of the particles, etc. during the polymerization reaction of the acrylic monomer and the room-temperature self-crosslinking monomer, thereby improving durability.

In an example, anionic emulsifiers and nonionic emulsifiers may be used as reactive emulsifiers.

More specifically, the anionic emulsifier includes at least one selected from an alkali metal salt or ammonium salt of alkyl phenols or higher alcohols sulfuric acid; an alkali metal salt or ammonium salt of alkyl or aryl sulfonate; and an alkali metal sulfate salt or ammonium salt of polyoxyethylene alkyl phenol ether, polyoxyethylene alkyl ether or polyoxyethylene aryl ether.

The nonionic emulsifier includes one or more selected from polyoxyethylene alkyl phenyl ether, polyoxyethylene alkyl ether, and polyoxyethylene aryl ether.

If the content of the reactive emulsifier is below the range mentioned above, stable dispersion is not achieved during the emulsion polymerization process, and the initial particle generation, size control of the generated particles, and stability of the particles are reduced, making it difficult to improve water resistance and durability, and if the content of the reactive emulsifier is above this range, it may deteriorate the properties of the monomers, resulting in a decrease in properties such as water resistance and durability.

In addition, the biodegradable coating composition of the second coating layer 20 includes water, black mica, activated carbon, toxic sulfur, minerals, liquid microorganisms, and starch.

More specifically, the biodegradable coating composition of the second coating layer 20 includes 2 to 10 parts by weight of black mica, 1 to 3 parts by weight of activated carbon, 0.5 to 2 parts by weight of detoxified sulfur, 1 to 3 parts by weight of minerals, 1 to 3 parts by weight of liquid microorganisms, and 5 to 10 parts by weight of starch, based on 100 parts by weight of water.

By coating the biodegradable coating composition on the first coating layer 10 of the inner surface of the paper member, the active ingredients of the biodegradable coating composition can supply the nutrients necessary for the growth of crops by biodegradation during the planting period and help the crops to grow without separate fertilization work, thereby preventing nutrient deficiency in the soil.

In addition, because the time the biodegradable coating composition of the first coating layer 20 maintains its shape is increased or decreased according to the number of coatings, amount of coatings, and so on, the number of coatings and the amount of coatings may easily be changed according to the crops to be planted.

The weight ratio of the paper member and the second coating layer 20 is preferably within the range of 2 : 0.05 to 0.2 in order to allow the entire natural biodegradation to occur after 3 to 4 months after the end of incubation based on the growth of general crops.

If the second coating layer 20 is formed at a ratio below this range, the second coating layer 20 will be too thin to maintain its shape or increase adhesion, or provide sufficient active ingredients of the biodegradable coating composition, and if the content of the second coating layer 20 is above this range, the coating layer will be thicker than necessary and the biodegradation rate will be slowed down, which is not desirable.

The water is added to allow the compositions of the biodegradable coating composition to be diluted in and evenly mixed with the water, and it is preferable to use water at 80 to 90 °C.

If water below 80 °C is used, the compositions may not easily diluted in water and may not be evenly mixed, and if water above 90 °C is used, the active components of the compositions are destroyed, which is undesirable.

In addition, if water is less than 100 parts by weight, the viscosity may be too high, making it difficult for the coating to proceed smoothly, and if water is in excess of 100 parts by weight, the viscosity is too watery and the adhesion strength decreases.

The black mica is a mineral that has the effect of purifying water and soil and facilitating oxygen supply through ion exchange to activate crop growth, adsorbing harmful gases to prevent soil pollution, improving acid soil to reduce persistent damage, and also reducing crop aging due to its inherent mineral content, and is preferably powdered to a particle size distribution of 300 to 700 mesh.

If the particle size distribution of the black mica is less than the size mentioned above, the minerals contained in the black mica may not be sufficiently diluted in water, and if the size distribution is greater than the size mentioned above, the particle size will be larger than necessary, which is not only uneconomical but also reduces the work efficiency.

If the content of the black mica is below the range mentioned above, it is difficult to sufficiently provide the effects of the black mica such as purification, crop growth activation, and the effects of the mineral components contained therein, and above this range, it is undesirable because it may adsorb and kill even the fungi that are beneficial to crops or soil.

The activated carbon is formed by burning the leaves and stems of naturally occurring plants and cultivated plants, the bark of plants, the roots and fruits of plants, etc. through a combustion process by high heat treatment to make carbon material, processing the carbon material into a powder having a particle size distribution of 1,000 to 1,500 mesh using a fine mill, and then treating the powder again with high heat. The activated carbon radiates far-infrared rays with a wavelength of 10 to 100 micrometers, improves the permeability of the soil to allow air to flow through, multiplies microorganisms that help plants grow and promotes crop growth, is porous and sterilizes harmful bacteria in the ground, and performs various antibacterial, purification, and deodorization functions.

If the content of the activated carbon is below the range mentioned above, it is difficult to sufficiently provide the effects such as sun protection, antibacterial effect, and purification and deodorization effects, and above this range, the excess content of the activated carbon causes a problem of reduced adhesion strength.

The detoxified sulfur helps to take rooting, enhances immunity to improve growth, prevents various fungi, bacteria, diseases with the antibiotic effect of sulfur, is effective against downy mildew, powdery mildew, and mold bacteria, and prevents the reproduction of harmful microorganisms to thus prevent the spread of various infectious diseases.

If the content of the detoxified sulfur is below the range mentioned above, it is difficult to sufficiently provide the effects such as rooting, immunity enhancement, antibiotic effect, and effect of preventing spread of infectious diseases, and above this range, it is undesirable because the excess content may adsorb and kill even the fungi that are beneficial to crops or soil, and there also occurs a problem of reduced adhesion strength.

The minerals restore soil, ionize soil, change microorganisms into a favorable environment, decompose harmful substances such as residual pesticides, heavy metals, salts, etc., and promote oxygen activity to enhance oxygen reduction reactions in vivo. The minerals also have a bactericidal effect on anaerobic bacteria or pathogens that are weak to acid, maintain water permeability and water retention, and promote plant root elongation to promote the development of hair roots to produce vital and high-quality agricultural products, thereby enhancing the taste, aroma, sugar, and immunity of crops.

If the content of the minerals is below the range mentioned above, it is difficult to sufficiently provide the effects such as soil restoration, decomposition of harmful substances, sterilization, and growth promotion, and above this range, the excess content causes a problem of reduced adhesion strength.

The liquid microorganism may include dozens of types of microorganisms other than lactic acid bacteria, actinomycetes, photosynthetic bacteria, and yeast bacteria.

More specifically, the effective microbiota with lactobacilli as the main body may be one or a combination of two or more of Lactobacillus plantarum, B. amyloliquefaciens, and Lactobacillus casei, and the aerobic microbiota with actinomycetes as the main body may be one or a combination of two or more of Lactobacillus plantarum, B. amyloliquefaciens, and Hypomonas pollamopa, and the anaerobic microbiota with photosynthetic bacteria as the main body may be one or a combination of two or more of Lactobacillus plantarum, B. belezensis, and P. granoli.

When decomposing organic substance, the liquid microorganisms absorb nitrogen into the body, decompose proteins (organic matter) into low molecular weight amino acids, through which mineralized ammonia is oxidized into nitrous acid and nitric acid, and then denitrifying bacteria after denitrifying reaction is released into the atmosphere as molecular nitrogen (N).

Therefore, during the breeding period, salt concentration can be lowered through the decomposition process of the liquid microorganisms in the soil, and the soil environment can be improved in the long term, thereby helping the root development and growth of crops.

If the content of the liquid microorganisms is below the range mentioned above, the decomposition effect of the liquid microorganisms is insignificant, making it difficult to sufficiently help the soil environment and the root development and growth of crops, and above this range, the excess content causes a problem of reduced adhesion strength.

The starch is a component that accelerates biodegradability and is not strictly limited to any type or form.

In an example, the starch may be a non-modified starch, a physically or chemically modified starch, or a combination thereof.

These may include, according to the type of grain from which starch is derived, corn starch, glutinous corn starch, potato starch, sweet potato starch, wheat starch, tapioca starch, rice starch, etc., and one or more of these may be selected and used.

In addition, examples of the modified starch include acid-treated starch, oxidized starch, esterified starch, oxidized esterified starch, etherified starch, oxidized etherified starch, crosslinked starch, etc., and specific examples may include acetylated distarch adipate, acetylate distarch phosphate, octenyl succinic acid starch, distarch phosphate, monostarch phosphate, phosphated distarch phosphate, acetic acid starch, hydroxypropyl distarch phosphate, and hydroxypropyl starch, and one or more of these may be selected and used.

If the content of the starch is below the range mentioned above, the biodegradable acceleration effect may be insufficient, and above this range, physical properties such as tensile strength, elongation at break, weather resistance, and the like may be degraded, which is not preferable.

In addition, in an example, a composite trace element may be further included.

More specifically, with respect to 100 parts by weight of water, 1 to 2 parts by weight of the composite trace element may be further included, in which the composite trace element may be one or a combination of two or more of ZnSO₄, 7H₂O, FeSO₄,7H₂O, CuSC₄, 5H₂O, MnSO₄, 4H₂O, Na₂, MO₄, and 2H₂O.

Although in small amounts, the composite trace elements act as components of enzymes in plants and are essential for the normal growth of plants, and including 1 to 2 parts by weight of the composite trace elements with respect to 100 parts by weight of water helps plants grow.

In an example, the method of coating may include any one method selected from the group consisting of a roll coater, a blade coater, a rod coater, an air knife coater, a short dwell coater, a bill blade coater, and a gate roll coater.

According to the examples of the present disclosure, it is possible to supply nutrients necessary for the growth of crops by the biodegradation process of compositions that biodegrade completely after 3 to 4 months, help with the crop growth and prevent malnutrition in soil without separate fertilization works, eliminate the risk of damaging the seedling roots because there is no need for any separating work after seedling, reduce labor, and solve the soil pollution problems.

The above description has been illustrated by means of drawings showing preferred embodiments and assigning drawing symbols and designations to the configurations shown in the drawings for ease of explanation, but this is only one embodiment of the invention and should not be construed as limiting the scope of the claims to the shapes shown in the drawings and the designations assigned thereto, and it goes without saying that, from the description, the change of the present invention to various predictable shapes and the simple substitution of the present invention to a configuration having the same function are within a range that may be changed to easily implement the present invention by a person skilled in the art.

### Description of Reference Numerals

| | | | |
|---|---|---|---|
| 1: | functional seedling paper pot | 2: | functional seedling seedbed |
| 1A, 2A: | side portion | 1B, 2B: | bottom portion |
| 10: | first coating layer | 20: | second coating layer |
| H: | holes | | |

## Claims

1. A naturally biodegradable functional seedling paper pot and seedbed, comprising:
a paper member with an open top, a side portion 1A and 2A, and a bottom portion 1B and 2B;
a first coating layer 10 coated with an acrylic emulsion resin on inner and outer surfaces of the paper member;
a second coating layer 20 coated with a biodegradable coating composition on the first coating layer 10 of the inner surface of the paper member; and
a plurality of holes H formed in the bottom portion 1B and 2B of the paper member,
wherein the biodegradable coating composition of the second coating layer 20 includes water, black mica, activated carbon, detoxified sulfur, minerals, liquid microorganisms, and starch.

2. The naturally biodegradable functional seedling paper pot and seedbed according to claim 1, wherein the paper member has a cup shape with the open top, the side portion 1A, and the bottom potion 1B.

3. The naturally biodegradable functional seedling paper pot and seedbed according to claim 1, wherein the paper member includes a plurality of paper members in a cup shape with the open top, the side potion 2A, and the bottom potion 2B, and which are arranged vertically and horizontally at a certain distance in a checkerboard pattern to receive seedlings therein.

4. The naturally biodegradable functional seedling paper pot and seedbed according to claim 1, wherein the acrylic emulsion resin of the first coating layer 10 includes an acrylic monomer, a room-temperature self-crosslinking monomer, a reactive emulsifier, and water.

5. The naturally biodegradable functional seedling paper pot and seedbed according to claim 1, wherein the biodegradable coating composition of the second coating layer 20 includes 2 to 10 parts by weight of black mica, 1 to 3 parts by weight of activated carbon, 0.5 to 2 parts by weight of detoxified sulfur, 1 to 3 parts by weight of minerals, 1 to 3 parts by weight of liquid microorganisms, and 5 to 10 parts by weight of starch, based on 100 parts by weight of water.
